# EUROPEAN PATENT APPLICATION

(11) **EP 0 818 941 A2**
(43) Date of publication of application: **14.01.1998**
(21) Application number: 97304381.3
(22) Date of filing: 23.06.1997
(51) Int. Cl.: H04Q 11/04

(54) **Communication links for transmission of data in fixed size packets**

(30) Priority: 13.07.1996 GB 9614814
(71) Applicant: GPT LIMITED, Coventry, CV3 1HJ (GB)
(72) Inventor: Proctor, Richard John, Corfe Mullen, Wimborne Dorset BH21 3QY (GB)
(74) Representative: Waters, Jeffrey

(57) **Abstract**

Where a stream of data is passed along an intermediate link L₁, L₂ etc at a higher overall data rate than outside the intermediate link, such as when inverse multiplexing is used in asynchronous transfer mode where a number of low speed data links L₁ etc are used to emulate a data link which is higher speed than the original incoming stream of data, the splitting of the data into the multiple streams necessitating the insertion of control packets into the links in order to correct for the disparity in propagation time along the links, the interfaces such as IMA¹ and IMA² containing buffers for data packets before transmission down the intermediate links and after reception at the end of the intermediate links, in order to eliminate cell delay variation, which has the result that cells in the output stream can vary by up to two cell positions relative to that in the input cell stream because of the different quantisation of the intermediate link and because of the need to send control packets, arrangements are made for the queue in the input buffer and in the output buffer to be maintained at a constant number of cells, for example by passing information on the input buffer length in the control cells, so that the reconstructed data stream is exactly the same as the incoming data stream, although delayed by a fixed additional two cell delay.

## Description

This invention relates to communication links for transmission of data in fixed size packets.

The invention particularly relates to ATM (asynchronous transfer mode) which uses communication links between nodes for example computers to transmit information in small packets known as cells, typically 53 byte long, which are short enough for delay sensitive devices but long enough for data, according to an ITU-T Recommendation I.150;

ATM typically uses wideband links e.g. optical fibres typically between 25-620 Mbit/sec and above, but this causes a problem when such links are not available.

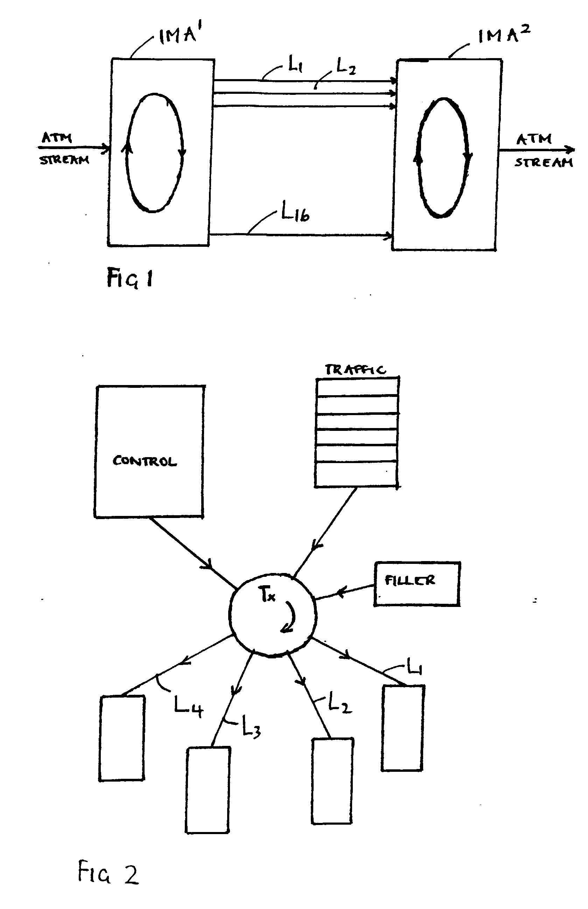

One technique which has been developed to overcome this problem is so-called inverse multiplexing (US-A-5 251 210). (A specification for Inverse Multiplexing for ATM (IMA) is under discussion at the ATM Forum.) Referring to Figure 1, an incoming stream of data clocked at e.g. 30 Mbit/sec is input into a first interface IMA¹ (inverse multiplexing for ATM), which distributes the cells cyclically between sixteen standard lower speed links L₁, L₂, L₃ etc which operate at 2 Mbit/sec. The interface IMA¹has control circuitry and a transmitter and IMA² has a receiver and control circuitry, in order to reassemble the original data stream. In this way a number of slow speed links emulate one higher speed link.

The links are physically separate paths and indeed could be totally different in character e.g. L₁ could be a telephone line, L₂ could be a microwave land link, and L₃ could be a satellite link. Propagation delays would then be widely different e.g. the fastest could be 2 ms and the slowest could be 18 ms.

For this reason, the inverse multiplexing technique entails the addition of control cells at regular intervals in the links L₁ etc every M data cells (where M is typically in the range 32-256), which contain timing information which enables the data stream to be reassembled in the correct order at IMA².

This means that the total data rate across the link from IMA¹ to IMA² must exceed that of the data rate through the communication link as a whole i.e. before IMA¹ and after IMA². Because the data rate is higher, the quantisation steps (in time) are smaller, and do not keep step with those for the communication link as a whole.

Referring to Figure 2, IMA¹ has a transmitter Tx which distributes incoming traffic cells (interspersed with unused (idle) cells), forming a continuous stream ("traffic") to each link L₁ etc in turn in round robin fashion under the instructions of control circuitry ("control").

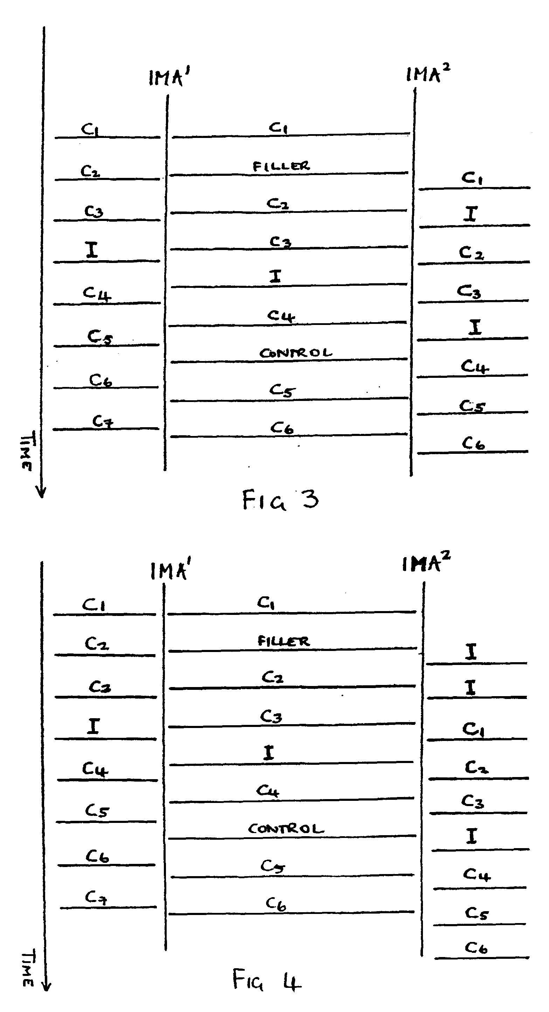

Figure 3 shows these time slots in symbolic fashion. Time increases in a downwardly vertical direction as seen in Figure 3. Thus, the ATM stream arriving at IMA¹ consists of traffic cells c₁, c₂ interspersed with idle (i.e. unused) cells I. These arrive at the data rate of the incoming ATM stream.

The time slots between IMA¹ and IMA² in Figure 3 show the time of entry of the traffic and idle packets onto the intermediate links L₁ to L₁₆ The slots are slightly closer together than those of the incoming ATM stream. Thus a situation can arise as is shown for traffic packet c₂ where the time slot for the particular link, say, L₂, has already arrived before the traffic packet c₂ is available for transmission. IMA¹ thus has a means (Figure 2) of generating filler packets ("filler") to maintain the streams of data along the intermediate links continuous. Traffic packet c₂ is transmitted along the third link in the next time slot.

Another problem arises after traffic slot c₅ has become available for transmission. Instead of being transmitted down link L₇ the position has been reached whereby 31 data cells have been fed down this link, necessitating a control cell to be inserted. Traffic cell c₅ is therefore transmitted along the next available link L₈.

IMA² is the inverse of the arrangement of IMA¹ shown in Figure 2, in that the cells are re-assembled into the order of the original stream, utilising the information contained in the control cells. It will be seen that the quantisation steps of the traffic and idle packets to the right of vertical line IMA² in Figure 3 are the same as those of the incoming data stream, but obviously there is a considerable time differential between them because of the propagation delay along the intermediate links which has not been illustrated in Figure 3. It will be noticed that the transmission of traffic cell c₁ along link L₁ results in traffic cell c₁ in the recombined ATM stream. However, the next cell that was sent was a filler cell, and this is discarded at IMA². Since there is no cell to send, the receiver generates an idle cell i.e. an unused cell which it transmits after traffic cell c₁.

It will also be noticed that the control cell is discarded in the receiver, but this time traffic cell c₄ has already arrived so there is no need for an idle cell to be generated.

Both IMA¹ and IMA² contain buffers for queuing the traffic and idle cells. The buffer in IMA¹ is provided because of the quantisation discrepancy between the data rates and also because of the need to generate control cells. The buffer at the output is provided similarly because of the disparity in quantisation rates and also because of the need to discard filler or control cells without leaving gaps in the reconstructed ATM stream.

It is recognised that even with these buffers, individual cells of the recombined stream may be displaced due to the insertion of idle cells as described above, resulting in so-called cell delay and that this cell delay can vary by an amount up to two cells' length. The maximum delay of two cells could be due to the fact that the cell has just missed an opportunity across a link, and the next link is due to send a controll cell. This cell delay variation (CDV) can cause problems for services that are operating close to their permitted performance limits and may cause problems at subsequent policing points in the network.

The invention is attempting to eliminate this cell delay variation, but is not simply applicable to asynchronous transfer mode with inverse multiplexing, but is more generally applicable to any communication link which includes an intermediate link or links which collectively have a higher data rate than the original data stream.

The invention provides a communication link for the transmission of data in fixed size packets, comprising at least one intermediate link, the total data rate of which exceeds that of the communication link, a buffer for queuing packets before transmission into one end of the intermediate link(s), a buffer for queuing packets after reception at the other end of the intermediate link(s), and queue length means for transmitting information on the queue length before transmission, along the intermediate link(s) and for maintaining the input queue length plus the output queue length at a fixed number of packets.

The queue length means makes it possible to recreate, after the intermediate link(s), exactly the packet stream before the intermediate link(s) despite the different quantisation of the intermediate link(s).

A communication link for the transmission of traffic in fixed size packets constructed in accordance with the invention will now be described, by way of example, with reference to the accompanying drawings, in which:
Figure 1 is a symbolic representation of known ATM using inverse multiplexing (IMA);
Figure 2 is a symbolic representation of IMA¹;
Figure 3 is a symbolic representation of time slots in the intermediate links and in the main ATM stream corresponding to Figures 1 and 2;
Figure 4 is a view corresponding to Figure 3 but with the communication link of the invention;
Figure 5 is a representation of the communication link of the invention;
Figure 6 is a further representation of the data link of Figure 5 in more detail;
Figure 7 is an algorithm showing the routine to be performed by the input buffer; and
Figure 8 is an algorithm showing the routine to be performed by the output buffer.

The communication link according to the invention has all the features of the communication link described with reference to Figures 1 and 2 of the accompanying drawings showing the known inverse multiplexing (IMA) application for asynchronous transfer mode (ATM). A single incoming data stream is cyclically divided into M slower speed data links using a transmitter as shown in Figures 1 and 2, the multiple intermediate links emulating a single link of higher data rate than the incoming ATM stream. Since the M links have different propagation delays, control cells are sent along each of the multiple intermediate links M (similar to the links L₁ etc) every predetermined number of traffic or idle cells sent along those links. These control cells contain information which enables the original ATM data stream to be recombined in the correct order at the receiver IMA². Filler cells are similarly generated for the reasons described with reference to Figure 3.

Again, as was provided in the known IMA application of Figures 1 to 3, a buffer for queuing cells before transmission into the intermediate links and another buffer for queuing cells after reception at the other end of the intermediate links are provided.

Figure 5 shows the essential features of the communication link.

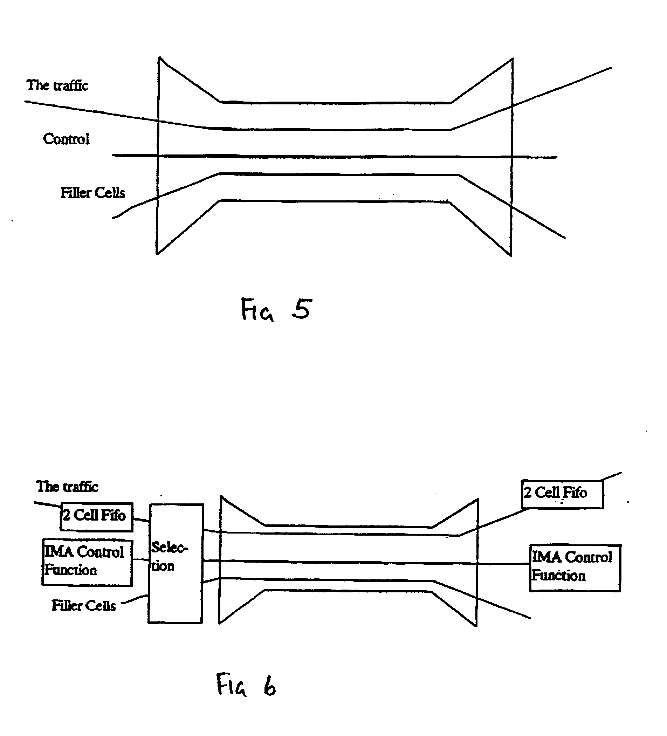

In accordance with the invention, the communication link of Figure 5 is provided with queue length means (not shown) which is responsible for transmitting information on the queue length in the input buffer along the intermediate links and for maintaining the input queue length plus the output queue length at a constant number of cells. Referring to Figure 6, the input buffer is a two cell first-in, first-out (FIFO) buffer, as is the output buffer, and the queue length means is responsible for arranging that two cells and only two cells are stored in totality between those two buffers.

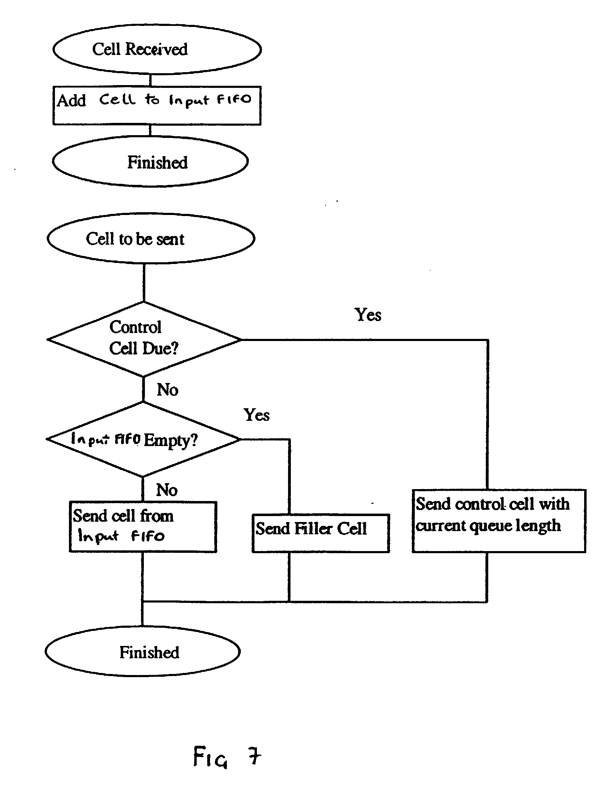

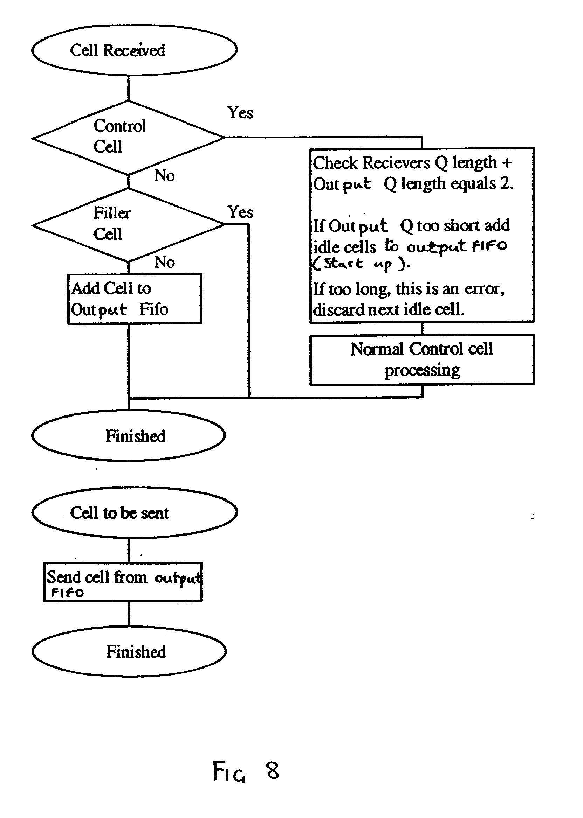

The IMA control function in Figure 6 (corresponding to "control" in Figure 2) operates in accordance with the protocol illustrated in Figure 7. This is in two parts, the actions on receipt of a cell, and the actions when a cell is due to be sent to a link. These parts are separated by the input FIFO. The receiver adds to the FIFO buffer. The sender removes cells from the FIFO buffer. The selection unit (corresponding to Tx in Figure 2) dispatches a cell from the buffer, a control cell or filler cell as appropriate. A corresponding control function at the receive end performs the operations in Figure 8. The top part of Figure 8 is concerned with the receipt of a cell along an intermediate link and the lower part is concerned with sending the cell into the recombined ATM stream. The output FIFO separates these two elements.

Thus, the control cells are used to enable the receiver to check that the queue in the input buffer and the queue in the output buffer equals exactly two cells. The information could be contained in two spare bits of the link stuff indication byte or any other convenient field. If the combined length of the queue is too short, as will be the condition at start-up, the receiver loads two idle cells into the receive buffer. If there are too many cells in the output buffer to produce a combined length of two cells between the two buffers, this represents an error and the next idle cell is discarded. Under normal operating conditions, in the absence of errors the input queue should never be two cells long when a control cell is sent.

There are two types of errors that can confuse the system. Control or filler cells being corrupted and looking like ordinary traffic, this would cause the output FIFO to have too many cells in it. A corrupt cell being treated as a control (or more likely a filler cell). This will cause the FIFO to have too few cells in it, though the corrupt cell is likely to be detected through other mechanisms.

It is necessary to control the start-up of the output FIFO and check its size while the system is running. The input FIFO before sending a cell across the intermediate links and the length of the output FIFO after transfer across the links (and allowing for the retiming of the links) should at any time be exactly two cells in total as stated.

On the input side traffic would be discarded until the link is operational, and thus the initial condition could just be met by simply loading two idle cells into the exit FIFO. A slightly better system that allows the loading of the two FIFOs to be checked during operation would be to encode the length of the input FIFO into the control cells, leaving it to the terminating end to ensure that exit FIFO is the correct length (when it wants to be). The information could be passed in two spare bits of the link stuff indication byte.

In normal operating conditions, the input FIFO will contain zero cells and the output FIFO two cells. There will be times when the input FIFO and the output FIFO each contain one cell, and times when the input FIFO contains two cells, with the output FIFO containing no cells. The latter situation could arise if a filler cell was sent, followed by a control cell, i.e. due to quantisation and control. In general, queues will tend to move from the input to the output because the overall rate of the intermediate links is faster.

With the arrangement of the invention, at the receiving end, the control and filler cells are removed without adding idle cells to the traffic. With previously known IMA systems, control cells and filler cells were discarded, but either cells could have resulted in the generation of idle cells in the output data stream, as in the example illustrated in Figure 3.

Referring to Figure 4, the use of the queue length means means that under normal conditions, the output buffer must have two cells in it so that even if filler and control cells are sent consecutively, there will be no need to generate an idle cell (say between c₁ and c₂ in Figure 3) in the reconstructed ATM stream (the maximum delay of two cells could be due to the fact that the cell has just missed an opportunity across a link, and the next link is due to send a control cell).

While it has been stated that two cells are stored in combination in the input and output buffers, any fixed number of cells could be stored. One stored cell would suffice for decoupling (overcoming the quantisation disparity) but would not overcome the problems of control cells. Three or more cells could be queued, but would add unnecessarily to the fixed delay. In other systems where for example more control cells were sent, the minimum number of cells needed to be queued to eliminate cell delay variation could be three or more.

While the invention has been described in terms of inverse multiplexing for asynchronous transfer mode, the invention is applicable to any intermediate link of higher data rate than a main link, in order to avoid variable delays due to the different quantisation of the intermediate link.

## Claims

1. A communication link for the transmission of data in fixed size packets, comprising at least one intermediate link, the total data rate of which exceeds that of the communication link, a buffer for queuing packets before transmission into one end of the intermediate link(s), a buffer for queuing packets after reception at the other end of the intermediate link(s), and queue length meams for transmitting information on the queue length before transmission, along the intermediate link(s) and for maintaining the input queue length plus the output queue length at a fixed number of packets.

2. A communication link as claimed in claim 1, in which the fixed number of packets is two.

3. A communication link as claimed in claim 1 or claim 2, in which the queue length means is arranged so that, on start-up when both buffers are empty, the buffer for storing received packets is filled with two unused packets.

4. A communication link as claimed in any one of claims 1 to 3, in which the information on the queue length before transmission is encoded in control cells sent along the intermediate links.

5. A communication link as claimed in any one of claims 1 to 4, in which there are a plurality of intermediate links, each of which has a data rate less than that of the communication link.

6. A communication link as claimed in claim 5, in which the link is adapted for inverse multiplexing in asynchronous transfer mode in which a continuous stream of traffic packets interspersed with unused packets is transmitted, wherein a transmitter for transmitting packets into one end of the intermediate links is arranged to transmit into each intermediate link a respective control packet after a predetermined number of packets have been sent along that link, the control packet containing information to enable the differential propagation delays of each link to be corrected for, and wherein the receiver at the other end of the intermediate links is arranged to discard the control packet so that it is not forwarded to the output buffer.

7. A communication link as claimed in claim 5 or claim 6, in which the transmitter is arranged to transmit filler packets down the next intermediate link if no incoming packet is available for transmission, and the receiver at the other end is arranged to discard the filler packet so that it is not forwarded to the output buffer.
